# EUROPÄISCHE PATENTSCHRIFT

(11) **EP 3 077 298 B1**
(45) Veröffentlichungstag und Bekanntmachung des Hinweises auf die Patenterteilung: **18.10.2017**
(21) Anmeldenummer: 14805282.2
(22) Anmeldetag: 28.11.2014
(51) Int. Cl.: B65D 19/24, B29C 45/16

(54) **PALETTE MIT RUTSCHHEMMEND BESCHICHTETER EINFAHRÖFFNUNG**
PALLET HAVING INSERTION OPENING WITH A SLIP-RESISTANT COATING
PALETTE POURVUE D'UNE OUVERTURE POUR LA FOURCHE PRÉSENTANT UN REVÊTEMENT ANTIDÉRAPANT

(30) Priorität: 02.12.2013 DE 102013113336
(43) Veröffentlichungstag der Anmeldung: 12.10.2016
(73) Patentinhaber: Paul Craemer GmbH, 33442 Herzebrock-Clarholz (DE)
(72) Erfinder: FINKE, Ralf-Peter, 33330 Gütersloh (DE); SCHÄFER, Hubert, 33442 Herzebrock-Clarholz (DE)
(74) Vertreter: Habbel, Ludwig
(86) Internationale Anmeldenummer: PCT/EP2014/075999
(87) Internationale Veröffentlichungsnummer: WO 2015/082359

(56) Entgegenhaltungen:
- DE-A1-102005 003 725
- DE-U1- 8 407 010
- DE-U1-202011 003 697
- GB-A- 1 540 679
- US-A- 5 453 236
- US-A- 5 809 905

## Beschreibung

Die Erfindung betrifft eine Palette nach Anspruch 1 sowie ein Verfahren zum Herstellen einer Palette.

Aus der DE 25 54 210 A1 oder aus der DE 83 10 685 U1 ist die rutschhemmende Ausgestaltung von Paletten grundsätzlich bekannt: Bei diesen Paletten sind die Decks mit eingesetzten Stopfen aus einem Elastomermaterial versehen. Um einen möglichst durchgängigen Effekt der rutschhemmenden Ausgestaltung auf dem Deck zu ermöglichen, müssen derartige Stopfen nahe benachbart zueinander angeordnet werden, so dass auch kleinere Gebinde zuverlässig auf einem rutschhemmend ausgestalteten Bereich des Decks aufstehen und nicht etwa ausschließlich zwischen den Stopfen. Der Aufwand zur Herstellung derartiger Paletten ist vergleichsweise hoch, weil erstens hinsichtlich des Materialaufwands ein erheblicher Teil des rutschhemmenden Elastomermaterials nicht an der Oberfläche des Decks wirksam ist und als Rutschhemmung nutzbar ist, sondern den Körper des jeweiligen Stopfens bildet, und weil zweitens hinsichtlich des Montageaufwands die Vielzahl der Stopfen in den zuvor hergestellten Grundkörper der Palette eingesetzt werden muss.

Zudem ist es aus der DE 25 54 210 A1 bekannt, dass die rutschhemmende Wirkung durch eine Beschichtung auf dem Grundkörper der Palette erzielt werden kann.

Aus der Praxis ist es bekannt, dass die Beschichtung auf den Grundkörper der Palette auf unterschiedliche Art und Weise aufgebracht werden kann: flächige Beschichtungen können auf den Grundkörper einer Palette aufgeschweißt werden, beispielsweise indem zunächst coextrudierte Platten hergestellt werden, die ihrerseits zweischichtig aufgebaut sind. Auf der Oberseite weisen sie die gewünschten rutschhemmende Schicht auf und die Unterseite einer solchen coextrudierten Platte besteht aus einem Material, welches mit dem Grundkörper der Palette gut verschweißbar ist. Diese Herstellung ist vergleichsweise aufwendig.

Alternativ ist es bekannt, ein rutschhemmendes Beschichtungsmaterial unmittelbar auf das Palettendeck zu extrudieren. Bei diesem so genannten Aufextrudieren handelt es sich um ein grundsätzlich kontinuierliches Verfahren, welches bei anderen Produkten sehr vorteilhaft angewendet wird, welches bei Paletten jedoch aufgrund deren beschränkter Abmessungen diskontinuierlich durchgeführt werden muss, wobei jeweils die Anfangs- und die Endungs-Stellen beim Auftrag des aufextrudierten Material verfahrenstechnisch problematisch sind. Die Extrusion erfolgt üblicherweise in Streifen. Um einen sicheren Stand für auf der Palette befindliche Güter der verschiedensten Größen sicherzustellen, müssen die Streifen in einem geringen Abstand zueinander auf das Deck des Grundkörpers extrudiert werden. Dementsprechend viele Anfangs- und Endungs-Stellen der diskontinuierlichen Extrusionsvorgänge ergeben sich bei der Herstellung einer Palette und bewirken eine vergleichsweise unwirtschaftliche Verfahrensweise, da jeweils der Extrusionsvorgang angehalten und für die nächste Palette wieder erneut angefahren werden muss.

Als weitere Alternative ist es bekannt, in einem Mehrkomponenten-Spritzgießverfahren in einem ersten Verfahrensschritt den Grundkörper zu schaffen. Dabei ist eine vergleichsweise komplizierte Gießform mit einer Vielzahl von Einspritzstellen für das rutschhemmende Material erforderlich, um angesichts einer gewünschten geringen Schichtdicke sicherzustellen, dass sich dieses rutschhemmende Material möglichst vollständig und möglichst großflächig auf dem Palettendeck verteilt, ohne vorzeitig zu erstarren. Alternativ kann vorgesehen sein, in diesem Mehrkomponenten-Spritzgießverfahren eine Vielzahl einzelner, nicht zusammenhängender Stellen auf der Oberseite des Palettendecks rutschhemmend auszugestalten, wobei auch bei dieser Ausgestaltung eine Vielzahl von Angüssen bzw. Einspritzkanälen für das rutschhemmende Material vorgesehen sein müsste.

Aus der US 5 809 905 A ist eine Palette nach dem Oberbegriff des Anspruchs 1 bekannt. Die rutschhemmende Wirkung wird durch Einsätze erzielt, welche in Öffnungen der Palette eingesetzt werden.

Auch aus der DE 20 2011 003 697 U1, der US 5 453 236 A, der DE 84 07 010 U1, GB 1 540 679 A und DE 10 2005 003 725 A1 sind Paletten bekannt, die rutschhemmend ausgestaltet sind.

Der Erfindung liegt die Aufgabe zugrunde, eine Palette zu schaffen, die mit einem möglichst geringen Einsatz an rutschhemmendem Material eine möglichst sichere Handhabung der Palette ermöglicht, wobei das rutschhemmende Material zuverlässig mit dem Grundkörper verbunden ist. Weiterhin liegt der Erfindung die Aufgabe zugrunde, ein geeignetes Verfahren zur Herstellung einer solchen Palette anzugeben.

Diese Aufgabe wird durch eine Palette mit den Merkmalen des Anspruchs 1 gelöst. Vorteilhafte Ausgestaltungen sind in den Unteransprüchen beschrieben. Ein geeignetes Verfahren für die Herstellung einer solchen Palette ist in Anspruch 7 beschrieben.

Paletten weisen so genannte Einfahröffnungen auf, in welche die Zinken der Gabel eines Flurförderfahrzeugs eingeschoben werden können. Bei einer besonders schnellen Handhabung der Paletten in der täglichen Praxis, mit starken Beschleunigungs- und Bremskräften, kann es beim Abbremsen der Flurförderfahrzeuge dazu kommen, dass die Paletten aufgrund der Massenträgheit von der Gabel des Flurförderfahrzeugs zu rutschen drohen, bevor die Gabel vollständig abgesenkt und die Palette auf dem Untergrund abgestellt ist. Die Erfindung schlägt eine rutschhemmende Wirkung nicht nur auf dem Deck der Palette, sondern auch zwischen der Palette und dem Flurförderfahrzeug vor. Aus diesem Grund ist an dem oberen Rand einer Einfahröffnung die Unterseite dieses oberen Randes rutschhemmend beschichtet, wobei diese Schicht zur sprachlichen Unterscheidung von der so genannten "rutschhemmenden Beschichtung" auf dem Palettendeck als so genannte "Anti-Rutsch-Schicht" bezeichnet ist.

Die rutschhemmende Beschichtung sowie die Anti-Rutsch-Schicht bestehen aus dem gleichen Material und sind durch einen Verbindungskanal miteinander verbunden, der sich durch den Grundkörper der Palette erstreckt und der mit diesem rutschhemmenden Material gefüllt ist. Auf diese Weise wird eine besonders wirtschaftliche Herstellung der Palette unterstützt, indem die Beschichtung auf der Oberseite des Decks und die Anti-Rutsch-Schicht in der Einfahröffnung gleichzeitig im selben Spritzgießvorgang hergestellt werden können. Das rutschhemmende Material, welches die rutschhemmende Beschichtung und die Anti-Rutsch-Schicht bildet, stammt aus derselben Kunststofffamilie wie der Grundkörper der Palette. Auf diese Weise ist eine stoffschlüssige Verbindung zwischen dem rutschhemmenden Material und dem Grundkörper möglich, so dass die rutschhemmende Beschichtung und die Anti-Rutsch-Schicht hervorragend gegen ablösende Kräfte, wie z. B. Scherkräfte o. dgl. geschützt sind, die bestrebt sind, das rutschhemmende Material vom Grundkörper der Palette abzulösen. Weiterhin ergibt sich durch diese Materialwahl die Möglichkeit, das rutschhemmende Material mit dem Material des Grundkörpers zu mischen, so dass erstens eine hervorragende und hoch belastbare Verbindung mit dem Grundkörper der Palette erzielbar ist und zudem die rutschhemmende Wirkung stufenlos eingestellt und an die jeweiligen Anforderungen angepasst werden kann. Eine zu starke rutschhemmende Wirkung auf dem Palettendeck ist in der Praxis beispielsweise hinderlich, wenn Material auf das Palettendeck geschoben werden soll.

Vorteilhaft kann vorgesehen sein, dass das rutschhemmende Material eine Schichtdicke von lediglich 0,1 bis 2 mm aufweist, so dass Material eingespart wird und somit die Herstellungskosten der Palette vorteilhaft beeinflusst werden. Dies gilt angesichts der vergleichsweise großen Fläche insbesondere für die rutschhemmende Beschichtung auf dem Deck der Palette, während die im Vergleich dazu erheblich geringere Fläche der Anti-Rutsch-Schicht an der Einfahröffnung eine größere Schichtdicke aufweisen kann, z. B. um eine einfacheres und wirtschaftlicheres Herstellungsverfahren im Bereich dieser Anti-Rutsch-Schicht zu nutzen.

Die dünne Schichtdicke der vergleichsweise großflächigen rutschhemmenden Beschichtung auf dem Deck der Palette sowie gegebenenfalls auch der Anti-Rutsch-Schicht sind dadurch erzielbar, dass die Beschichtung im so genannten Spritzprägeverfahren aufgebracht wird. Dieses Verfahren wird am Beispiel der rutschhemmenden Beschichtung erläutert: Zunächst wird der Grundkörper als so genannter Vorspritzling hergestellt, und zwar im Spritzgießverfahren. Ein erstes Formteil begrenzt die Fläche des Decks des Grundkörpers. Nachdem der Vorspritzling ausreichend erstarrt ist, wird dieses erste Formteil entfernt, so dass der Vorspritzling in einem zweite Formteil nach wie vor gehalten wird und mit diesem gegen ein drittes Formteil gebracht werden kann, welches sich im Abstand von der Fläche des Decks des Vorspritzlings befindet. Es verbleibt also ein Spalt zwischen dieser Deck-Oberfläche des Grundkörpers bzw. Vorspritzlings und dem erwähnten dritten Formteil. Die Spaltbreite dieses Spalts ist dabei größer als die Schichtdicke der herzustellenden rutschhemmenden Beschichtung. Das zweite Kunststoffmaterial, welches die rutschhemmende Beschichtung bildet, wird in diesen Spalt eingebracht, und anschließend werden die beiden Formteile, also das dritte, zunächst im Abstand vom Deck befindliche Formteil, sowie das erste, den Vorspritzling haltende Formteil, zueinander bewegt, so dass dabei die Spaltbreite verringert wird. Das im Spalt befindliche Material wird hierdurch über die gesamte Spaltfläche verteilt, bis die endgültige Spaltbreite erzielt ist, die der gewünschten Schichtdicke der rutschhemmenden Beschichtung entspricht. Gleichzeitig kann durch diese Verringerung der Spaltbreite das rutschhemmende Material durch den Verbindungskanal in den Bereich der Einfahröffnung gedrückt werden, um dort an der Unterseite des oberen Randes der Einfahröffnung die Anti-Rutsch-Schicht zu bilden. Durch die Spritzprägetechnik lassen sich Materialien als rutschhemmende Beschichtung mit geringer Schichtstärke verarbeiten, die beispielsweise lebensmittelrechtlich unbedenklich sind und zudem aus derselben Kunststofffamilie stammen wie der Grundkörper der Palette.

Für das Aufbringen der Anti-Rutsch-Schicht auf den Grundkörper kann beispielsweise im so genannten Core-Back-Verfahren ein Bereich der Spritzgießform, der den Grundkörper begrenzt, vom Grundkörper zurückgezogen werden, um so einen Hohlraum zu schaffen, in den das rutschhemmende Material eingespritzt werden kann. Eine anschließende Pressbewegung wie beim Spritzprägeverfahren ist dabei nicht vorgesehen, so dass die Spritzgießform möglichst wirtschaftlich ausgestaltet und die Prozesssteuerung möglichst einfach gehalten werden kann. Die Fließwege des eingespritzten rutschhemmenden Materials im Hohlraum, der für die Anti-Rutsch-Schicht vorgesehen ist, sind erheblich kürzer als auf dem Deck des Grundkörpers für die rutschhemmende Beschichtung, so dass es des Prägevorgangs nicht bedarf.

Dadurch, dass das Beschichtungsmaterial bei dem Spritzprägeverfahren zunächst in einen vergleichsweise breiten Spalt eingespritzt wird, kann dieser Einspritzvorgang mit vergleichsweise geringem Druck erfolgen, denn der Druck muss nicht so hoch sein, dass sich das Schichtungsmaterial vollflächig über den gesamten Spalt verteilt. Diese Verteilung wird erst anschließend während der Verringerung der Spaltbreite bewirkt. Insbesondere wenn von vornherein der Spalt eine so geringe Spaltbreite aufweisen würde, wie sie der herzustellenden Schichtdicke der rutschhemmenden Beschichtung entsprechen würde, wäre ein Einspritzvorgang mit erheblichem Druck erforderlich, was erhebliche Anforderungen an Spritzgießmaschinen stellt.

Vorteilhaft kann an den umlaufenden Kanten das rutschhemmende Material gegen Beschädigungen, z. B. gegen abscherende oder abschälende Einwirkungen durch einen Rahmen geschützt sein, der durch den Grundkörper geschaffen wird. Insbesondere die Anti-Rutsch-Schicht ist derartigen Belastungen ausgesetzt, da sie sich an einer Einfahröffnung befindet. Um den erwähnten Rahmen zu bilden, ragt der Grundkörper entlang dem Umfang der Fläche, die mit dem rutschhemmenden Material beschichtet werden soll, nach außen vor, im Bereich des Decks beispielsweise nach oben. Auf diese Weise wird an der Oberfläche des Grundkörpers eine Mulde geschaffen, die mit dem rutschhemmenden Material ausgefüllt werden kann.

Der Rahmen erstreckt sich vorteilhaft nicht über die gesamte Höhe des rutschhemmenden Materials. So ist auch angesichts von Herstellungstoleranzen, die zu einem vergleichsweise hohen Rahmen und einer vergleichsweise dünnen rutschhemmenden Beschichtung führen könnten, gewährleistet, dass auch große Gegenstände, die auf das Palettendeck gestellt werden, gegen Rutschen gesichert sind. Es ist nämlich sichergestellt, dass diese Gegenstände nicht auf dem Rahmen aufstehen, sondern vielmehr auf der rutschhemmenden Beschichtung, die eine größere Schichtstärke aufweist und sich höher erstreckt als der Rahmen. Der Rahmen schützt das rutschhemmende Material gegen die erwähnten abscherenden oder abschälenden Einwirkungen, indem er den Grenzbereich seitlich abdeckt, in welchem das rutschhemmende Material an das Material des Grundkörpers grenzt.

Angesichts der geringen Schichtdicke, die vorteilhaft vorgesehen sein kann und angesichts dessen, dass bis auf die Öffnungen und die Rahmen die Palettenoberfläche großflächig rutschhemmend ausgestaltet sein kann, kann bei einem geringem Materialeinsatz an rutschhemmendem Material eine hervorragende, nahezu vollflächige Transportsicherung für auf der Palette aufstehendes Gut durch die nahezu vollflächige rutschhemmende Wirkung auf der Oberseite der Palette gewährleistet werden. Da die rutschhemmende Beschichtung sowie die Anti-Rutsch-Schicht jeweils durch den erwähnten Rahmen eingefasst und gegen seitliche Beschädigungen geschützt sein kann, wird auch bei einer geringen Schichtdicke der Beschichtung eine langlebige Ausgestaltung der Palette ermöglicht.

Alternativ kann jedoch vorgesehen sein, auf der Oberseite der Palette lediglich eine besonders relevante Bereiche rutschhemmend auszugestalten und nur in diesen Bereichen rutschhemmendes Material auf den Grundkörper aufzubringen. Einer dieser Bereiche schließt an den Verbindungskanal an, der zur Unterseite des oberen Randes einer Einfahröffnung führt. Die auf einige Streifen oder Punkte beschränkte rutschhemmende Beschichtung kann beispielsweise Material sparend dann vorgesehen sein, wenn eine Palette für einen bestimmten Einsatzzweck bestimmt ist und an eine bestimmte, vorgegebene Formgebung der zu transportierenden Güter angepasst werden kann.

Vorteilhaft kann die Schichtdicke des rutschhemmenden Materials etwa 0,5 mm betragen, so dass einerseits eine ausreichend verschleißfeste und dementsprechend langlebige Beschichtung, sowie andererseits ein möglichst geringer Einsatz an rutschhemmendem Material miteinander kombiniert sind. Diese Schichtdicke ist auch ausreichend, um einerseits eine haltbare stoffschlüssige Verbindung mit dem Grundkörper der Palette zu ermöglichen und andererseits die rutschhemmende Wirkung ohne Beeinträchtigung durch das weniger rutschhemmende Material des Grundkörpers der Palette sicherstellen zu können. Insbesondere auf dem Palettendeck kann diese geringe Schichtdicke der rutschhemmenden Beschichtung vorteilhaft sein, während in der Einfahröffnung die Anti-Rutsch-Schicht eine Schichtdicke von mehreren Millimetern aufweisen kann, beispielsweise 2 bis 4 mm.

Der Grundkörper und das rutschhemmende Material können vorteilhaft aus einem Olefin-Material bestehen. Die Gruppe der Olefine stellt eine Kunststofffamilie dar, bei der die einzelnen Kunststoffe einerseits die für den Grundkörper der Palette gewünschten Eigenschaften bereitstellen, beispielsweise was mechanische Stabilität angeht, als auch die für die Beschichtung gewünschten Eigenschaften, nämlich rutschhemmend zu wirken. Zudem können aus der Familie der Olefin-Kunststoffe lebensmittelverträgliche Kunststoffe ausgewählt werden, so dass entsprechende Anforderungen an eine Palette, die im Lebensmittel verarbeitenden Bereich eingesetzt werden soll, problemlos erfüllt werden können.

Beispielsweise kann der Grundkörper vorteilhaft aus einem Polyethylen oder aus einem Polypropylen bestehen und das rutschhemmende Material kann ein Olefin-Block-Copolymer sein.

Bei dem bereits erläuterten Herstellungsverfahren für die Herstellung einer vorschlagsgemäßen Palette kann die gleichzeitige Herstellung der rutschhemmenden Beschichtung auf der Oberseite des Decks sowie der Anti-Rutsch-Schicht in der Einfahrtasche dadurch erfolgen, dass an dem erwähnten ersten Formteil, welches den Vorspritzling hält, ein Teil zurückgezogen wird, der die spätere Unterseite des oberen Randes einer Einfahröffnung begrenzt. Auf diese Weise wird ein Spalt zwischen dieser Unterseite und dem ersten Formteil geschaffen. Ein Kern der Spritzgießform wird aus dem Vorspritzling entfernt, so dass ein Verbindungskanal zwischen dem erwähnten Spalt an der Einfahrtasche und dem bereits weiter oben erwähnten ersten Spalt geschaffen wird, der an dem Deck des Grundkörpers vorgesehen ist. Durch die Entfernung des Kerns und die Schaffung des erwähnten Verbindungskanals werden die beiden Spalten miteinander verbunden, so dass beim Einspritzen des rutschhemmenden Materials in den ersten Spalt, spätestens aber beim Spritzprägen, wenn die Spaltbreite des ersten Spalts verringert wird, rutschhemmendes Material vom ersten Spalt durch den Verbindungskanal in den zweiten Spalt fließt, der an der Unterseite des oberen Randes der Einfahröffnung vorgesehen ist. Bei diesem Einspritzvorgang wird also die rutschhemmende Beschichtung auf dem Deck der Palette sowie die Anti-Rutsch-Schicht an der Unterseite des oberen Randes der Einfahröffnung in einem einzigen Verfahrensschritt geschaffen, so dass eine möglichst wirtschaftliche Herstellung der Palette unterstützt wird.

Ein Ausführungsbeispiel der Erfindung wird anhand der rein schematischen Darstellungen nachfolgend näher erläutert. Dabei zeigt
- Fig. 1: eine Palette in perspektivischer Ansicht,
- Fig. 2: eine perspektivische Ansicht auf den Ausschnitt eines Grundkörpers eines Palettendecks im Bereich einer Einfahröffnung,
- Fig. 3: eine Ansicht perspektivisch von unten auf den Bereich von Fig. 2, und
- Fig. 4: eine Ansicht wie Fig. 3, wobei jedoch der Grundkörper mit einer Anti-Rutsch-Schicht versehen ist.

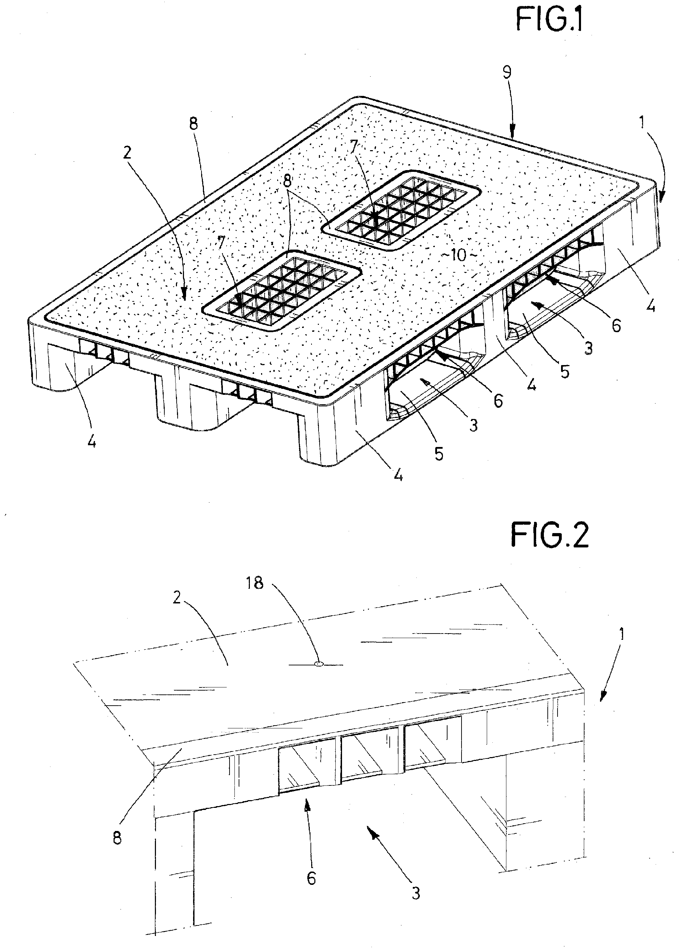

In Fig. 1 ist ein Grundkörper 1 einer Palette 9 dargestellt, wobei die Palette 9 eine als Deck 2 bezeichnete Oberseite aufweist, sowie zwei Einfahröffnungen 3 und mehrere Füße 4. Jede Einfahröffnung 3 ist allseitig umrandet, wobei zwei Füße 4 die beiden seitlichen Ränder einer Einfahröffnung 3 bilden und diese Füße 4 zu Kufen miteinander verbunden sind, so dass diese Kufen den jeweils unteren Rand 5 einer Einfahröffnung 3 bilden. Ein oberer Rand 6 der Einfahröffnung 3 wird durch die Unterseite des Decks 2 gebildet.

Das Deck 2 ist im Wesentlichen geschlossen ausgestaltet, weist jedoch in seinem mittleren Bereich zwei gitterartig ausgestaltete Öffnungen 7 auf. Um die Öffnungen 7 herum sowie entlang dem äußeren Umfang des Decks 2 verlaufen jeweils Rahmen 8, die sich gegenüber der übrigen Oberfläche des Decks 2 geringfügig nach oben erstrecken.

Auf der Oberseite des Decks 2 ist eine rutschhemmende Beschichtung 10 vorgesehen. Die Beschichtung 10 und der Grundkörper 1 bestehen aus unterschiedlichen Kunststoffmaterialien, die jedoch aus derselben Kunststofffamilie bestehen, nämlich jeweils aus einem Olefin-Werkstoff. Die Beschichtung 10 schließt an die Rahmen 8 an, so dass bis auf die Öffnungen 7 ein geschlossenes Deck 2 der Palette 9 geschaffen wird. Das Deck 2 wird folglich größtenteils durch die rutschhemmende Beschichtung 10 gebildet, wobei abweichend von dem dargestellten Ausführungsbeispiel die rutschhemmende Beschichtung 10 auf einige streifenförmige oder punktuelle Bereiche begrenzt sein kann.

Fig. 2 zeigt ausschnittsweise eine Ansicht auf einen Grundkörper 1, nämlich auf den Bereich eines Decks 2 oberhalb einer Einfahröffnung 3, wo das Deck 2 den oberen Rand 6 einer Einfahröffnung 3 bildet. Es ist vorgesehen, das Deck 2 mit einer rutschhemmenden Beschichtung 10 zu versehen, und der Rahmen 8 ist erkennbar, der sich gegenüber dem übrigen Deck 2 des Grundkörpers 1 geringfügig nach oben erstreckt. Im Deck 2 ist eine Mündung 18 erkennbar, die das obere Ende eines Verbindungskanals bildet.

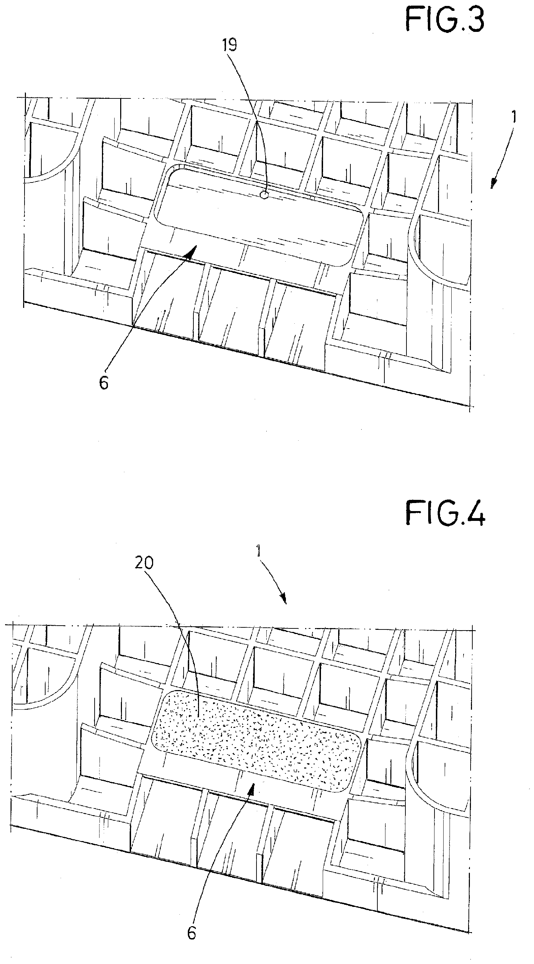

Fig. 3 zeigt den Bereich des Decks 2 der Fig. 2 in einer perspektivischen Ansicht von unten. Es ist erkennbar, dass der erwähnte Verbindungskanal, hier mit 19 gekennzeichnet, von der Oberseite des Decks 2 bis an die Unterseite des oberen Randes 6 verläuft und dort mündet.

Bei der Herstellung der Palette 9 ist vorgesehen, dass ein Abschnitt des Formteils, welcher nämlich den oberen Rand 6 des Grundkörpers 1 begrenzt, innerhalb dieses Formteils beweglich gelagert ist und vom Grundkörper 1 geringfügig entfernt wird, bevor das Beschichtungsmaterial in einen Spalt eingespritzt wird, der an der Oberseite des Decks 2 vorgesehen ist und dort die rutschhemmende Beschichtung 10 bildet. Bei diesem Einspritzvorgang oder spätestens bei dem anschließenden Prägevorgang, wenn nämlich die Spaltbreite des erwähnten Spaltes an der Oberseite des Decks 2 verringert wird, gelangt rutschhemmendes Material durch den Verbindungskanal 19 von der Oberfläche des Decks 2 in den Spalt, welcher zwischen dem oberen Rand 6 und dem beweglichen Abschnitt des Formteils geschaffen ist, so dass gleichzeitig mit der Aufbringung der rutschhemmenden Beschichtung 10 auf dem Deck 2 auch eine Anti-Rutsch-Schicht 20 an der Unterseite des oberen Randes 6 geschaffen wird, die in Fig. 4 ersichtlich ist. Durch den Verbindungskanal 19 sind die rutschhemmende Beschichtung 10 und die Anti-Rutsch-Schicht 20 miteinander verbunden, so dass zusätzlich zu deren jeweils stoffschlüssigen Verbindung mit dem Grundkörper 1 auch ein Formschluss geschaffen wird.

## Patentansprüche

1. Palette (9),
mit einem Grundkörper (1) aus einem Kunststoffmaterial, einem Deck (2), das die Oberseite der Palette (9) bildet, einer auf der Oberseite des Decks (2) vorgesehenen rutschhemmenden Beschichtung (10),
und Einfahröffnungen (3) zur Aufnahme der Gabel eines Flurförderfahrzeugs,
wobei eine Einfahröffnung (3) einen oberen Rand (6) aufweist, der von der Gabel unterfahrbar ist,
dieser obere Rand (6) an seiner Unterseite mit einer Anti-Rutsch-Schicht (20) versehen ist,
**dadurch gekennzeichnet,**
**dass** die rutschhemmende Beschichtung (10) und die Anti-Rutsch-Schicht (20) aus demselben rutschhemmenden Material bestehen und durch einen mit diesem Material gefüllten Verbindungskanal (19) miteinander verbunden sind, das rutschhemmende Material aus der selben Kunststofffamilie wie der Grundkörper (1) besteht,
und wobei die rutschhemmende Beschichtung (10) und die Anti-Rutsch-Schicht (20) als gleichzeitig hergestellte Bereiche eines Spritzkörpers geschaffen sind, der sowohl stoffschlüssig als auch formschlüssig mit dem Grundkörper (1) verbunden ist.

2. Palette nach Anspruch 1,
**dadurch gekennzeichnet,**
**dass** der Grundkörper (1) einen Rahmen (8) bildet, der das rutschhemmende Material begrenzt.

3. Palette nach Anspruch 1 oder 2,
**dadurch gekennzeichnet,**
**dass** die Anti-Rutsch-Schicht (20) eine Schichtdicke von 0,1 mm bis 4 mm aufweist.

4. Palette nach einem der vorhergehenden Ansprüche,
**dadurch gekennzeichnet,**
**dass** der Grundkörper (1) und das rutschhemmende Material aus einem Olefinmaterial bestehen.

5. Palette nach Anspruch 4,
**dadurch gekennzeichnet,**
**dass** der Grundkörper (1) aus einem Polyethylen- oder Polypropylenmaterial besteht.

6. Palette nach Anspruch 4,
**dadurch gekennzeichnet,**
**dass** das rutschhemmende Material aus einem Olefin-Block-Copolymer besteht.

7. Verfahren zum Herstellen einer Palette (9),
wobei ein Grundkörper (1) mit einem Deck (2) aus einem ersten Kunststoffmaterial im Spritzgießverfahren hergestellt wird,
**dadurch gekennzeichnet,**
**dass** der Grundkörper (1) als Vorspritzling hergestellt wird, wobei die Fläche des Decks (2) durch ein erstes Formteil begrenzt wird,
und anschließend ein den Vorspritzling haltendes zweites Formteil gegen ein drittes Formteil gebracht wird, welches sich im Abstand von der Fläche des Decks (2) des Vorspritzlings befindet, derart, dass ein Spalt zwischen der Fläche des Decks (2) und dem dritten Formteil verbleibt,
und wobei anschließend ein zweites Kunststoffmaterial, welches aus der selben Kunststofffamilie stammt wie das erste Kunststoffmaterial des Grundkörpers (1), als rutschhemmende Beschichtung (10) im Spritzprägeverfahren in den Spalt eingebracht wird,
und vor der Erstarrung des zweiten Kunststoffmaterials das zweite Formteil und das dritte Formteil relativ zueinander bewegt werden, derart, dass die Spaltbreite des Spalts verringert wird,
wobei ein Teil des zweiten Formteils, welcher die spätere Unterseite eines oberen Randes (6) einer Einfahröffnung (3) des Vorspritzlings begrenzt, zurückgezogen wird, derart, dass ein zweiter Spalt zwischen dieser Unterseite und dem zweiten Formteil geschaffen wird,
und **dass** ein Kern aus dem Vorspritzling entfernt wird, derart, dass ein Verbindungskanal (19) zwischen dem ersten Spalt und dem zweiten Spalt geschaffen wird,
und **dass** das zweite Kunststoffmaterial in den ersten Spalt und durch den Verbindungskanal (19) in den zweiten Spalt eingespritzt wird,
derart, dass bei diesem Einspritzvorgang die rutschhemmende Beschichtung (10) auf dem Deck (2) der Palette (9) sowie eine Anti-Rutsch-Schicht (20) an der Unterseite des oberen Randes (6) der Einfahröffnung (3) geschaffen wird.

## Claims

1. Pallet (9),
having a base body (1) of a plastic material,
a deck (2) which forms the top side of the pallet (9),
a slip-resistant coating (10) provided on the top side of the deck (2),
and insertion openings (3) for receiving the forks of a forklift truck,
where an insertion opening (3) has an upper edge (6) under which the fork is moved and this upper edge (6) is provided with an anti-skid layer (20) on its underside,
**characterised in that** the slip-resistant coating (10) and the anti-skid layer (20) consist of the same slip-resistant material and are joined to one another by a connecting channel (19) filled with this material, the slip-resistant material consists of the same type of plastic as the base body (1) and where the slip-resistant coating (10) and the anti-skid layer (20) are manufactured at the same time as parts of a plastic moulding which is joined to the base body (1) by both firm bonding and positive interlocking.

2. Pallet in accordance with claim 1, **characterised in that** the base body (1) forms a frame (8) which delimits the slip-resistant material.

3. Pallet in accordance with claim 1 or claim 2, **characterised in that** the anti-skid layer (20) has a thickness of between 0.1 mm and 4 mm.

4. Pallet in accordance with any of the preceding claims, **characterised in that** the base body (1) and the slip-resistant material consist of an olefinic material.

5. Pallet in accordance with claim 4, **characterised in that** the base body (1) consists of a polyethylene or polypropylene material.

6. Pallet in accordance with claim 4, **characterised in that** the slip-resistant material consists of an olefin block copolymer.

7. Process for manufacturing a pallet (9), where a base body (1) is manufactured with a deck (2) of a first plastic material by means of injection moulding,
**characterised in that** the base body (1) is manufactured as a raw moulding, where the surface of the deck (2) is delimited by a first moulding and then a second moulding holding the raw moulding is moved against a third moulding which is positioned at a distance from the surface of the deck (2) of the raw moulding, in such a way that a gap remains between the surface of the deck (2) and the third moulding and where a second plastic material, consisting of the same type of plastic as the first plastic material of the base body (1), is then pressed by the injection-compression process into the gap to form the slip-resistant coating (10), and the second moulding and the third moulding are moved relative to one another before solidification of the second plastic material, in such a way that the width of the gap is reduced,
where a part of the second moulding which delimits the subsequent underside of an upper edge (6) of an insertion opening (3) of the raw moulding is pulled back,
in such a way that a second gap is created between this underside and the second moulding and that a core is removed from the raw moulding in such a way that a connecting channel (19) is created between the first gap and the second gap, and that the second plastic material is injected into the first gap and, through the connecting channel (19), into the second gap, in such a way that through this injection process the slip-resistant coating (10) is created on the deck (2) of the pallet (9) as well as an anti-skid layer (20) on the underside of the upper edge (6) of the insertion opening (3).

## Revendications

1. Palette (9),
présentant un corps de base (1) en matière plastique,
un plan supérieur (2) formant le dessus de la palette (9),
un revêtement antidérapant (10) prévu sur le dessus du plan supérieur (2),
et des ouvertures (3) pour recevoir la fourche d'un chariot élévateur,
sachant que l'ouverture (3) présente un bord supérieur (6) sous lequel la fourche peut passer, et que ce bord supérieur (6) est pourvu sur son dessous d'une couche antidérapante (20),
**caractérisée en ce que** le revêtement antidérapant (10) et la couche antidérapante (20) se composent du même matériau antidérapant et qu'ils sont reliés entre eux par un canal de liaison (19) rempli de ce matériau, **en ce que** le matériau antidérapant appartient à la même famille de matières plastiques que le corps de base (1), et sachant que le revêtement antidérapant (10) et la couche antidérapante (20) sont créés comme zones simultanément produites constitutives d'un corps moulé par injection, qui est relié avec le corps de base (1) par adhésion aussi bien des matériaux que des formes.

2. Palette selon la revendication 1, **caractérisée en ce que** le corps de base (1) forme un cadre (8) qui limite le matériau antidérapant.

3. Palette selon la revendication 1 ou 2, **caractérisée en ce que** la couche antidérapante (20) présente une épaisseur comprise entre 0,1 et 4 mm.

4. Palette selon l'une des revendications précédentes, **caractérisée en ce que** le corps de base (1) et le matériau antidérapant sont en matériau à base d'oléfine.

5. Palette selon la revendication 4, **caractérisée en ce que** le corps de base (1) est en matériau à base de polyéthylène ou de polypropylène.

6. Palette selon la revendication 4, **caractérisée en ce que** le matériau antidérapant est à base d'un copolymère à blocs oléfines.

7. Procédé de fabrication d'une palette (9) sachant qu'un corps de base (1) comprenant un plan supérieur (2) est fabriqué selon un procédé de moulage par injection à partir d'une première matière plastique,
**caractérisé en ce que** le corps de base (1) est fabriqué sous forme d'ébauche, sachant que la surface du plan supérieur (2) est limitée par une première pièce moulée et qu'ensuite une deuxième pièce moulée retenant l'ébauche est amenée contre une troisième pièce moulée qui se trouve à distance de la surface du plan supérieur (2) de l'ébauche, de sorte qu'il reste un interstice entre la surface du plan supérieur (2) et la troisième pièce moulée, et sachant qu'ensuite une deuxième matière plastique provenant de la même famille de matières plastiques que la première matière plastique du corps de base (1) est introduite par injection-compression dans l'interstice pour officier de revêtement antidérapant (10), et qu'avant la solidification de la deuxième matière plastique la deuxième pièce moulée et la troisième pièce moulée sont déplacées l'une relativement à l'autre,
de sorte que la largeur de l'interstice diminue, sachant qu'est retirée une partie de la deuxième pièce moulée qui limite le futur dessous d'un bord supérieur (6) d'une ouverture (3) pour la fourche sur l'ébauche,
de sorte qu'est créé un deuxième interstice entre ce côté inférieur et la deuxième pièce moulée, et qu'un noyau est retiré de l'ébauche de sorte qu'est créé un canal de liaison (19) entre le premier interstice et le deuxième interstice, et que la seconde matière plastique est injectée dans le premier interstice et qu'elle emprunte le canal de liaison (19) pour pénétrer dans le second interstice, de sorte qu'au cours de cette opération d'injection le revêtement antidérapant (10) est créé sur le plan supérieur (2) de la palette (9) et qu'une couche antidérapante (20) est créée sur le dessous du bord supérieur (6) de l'ouverture (3) pour fourche.
